Europäisches Patentamt

**European Patent Office**

Office européen des brevets

(19)

(11) Veröffentlichungsnummer: **0 299 411 B1**

(12) **EUROPÄISCHE PATENTSCHRIFT**

(45) Veröffentlichungstag der Patentschrift: **18.09.91**

(51) Int. Cl.5: **B32B 27/06**, B32B 15/08, B32B 27/32, B29C 65/68

(21) Anmeldenummer: **88111060.5**

(22) Anmeldetag: **11.07.88**

(54) **Wärmeschrumpfbare Umhüllung.**

(30) Priorität: **15.07.87 DE 3723399**

(43) Veröffentlichungstag der Anmeldung:
**18.01.89 Patentblatt 89/03**

(45) Bekanntmachung des Hinweises auf die Patenterteilung:
**18.09.91 Patentblatt 91/38**

(84) Benannte Vertragsstaaten:
**AT BE CH DE FR GB IT LI NL SE**

(56) Entgegenhaltungen:
**EP-A- 0 008 912**
**DE-U- 7 501 913**

**DERWENT ABSTRACT NR. 77-28 254, (WPI)**
**TELESYSTEMES, QUESTEL, Paris & JP-**
**A-52-32 074 (DAINIPPON PRINTING KK),**
**10.03.1977**

(73) Patentinhaber: **RXS Schrumpftechnik-Garnituren GmbH**
**Profilstrasse 4**
**W-5800 Hagen 1(DE)**

(72) Erfinder: **Kipfelsberger, Christian, Dipl.-Ing.**
**Hauptstrasse 1**
**W-8071 Hepberg(DE)**
Erfinder: **Kupczyk, Andreas, Mgr.d.Phys.**
**Hengsteyerstrasse 41**
**W-5800 Hagen 1(DE)**

(74) Vertreter: **Fuchs, Franz-Josef, Dr.-Ing. et al**
**Postfach 22 13 17**
**W-8000 München 22(DE)**

**Beschreibung**

Die Erfindung betrifft eine wärmeschrumpfbare Umhüllung aus mindestens einer wärmeschrumpfbaren Komponente und aus einer mechanischen Verstärkungskomponente.

Es sind wärmeschrumpfbare Umhüllungen bekannt, die zur Verstärkung der mechanischen Eigenschaften verstärkende Einlagen enthalten, wie sie zum Beispiel in der Schrift des deutschen Gebrauchsmusters GM 75 01 913 beschrieben sind. Hier werden jedoch nur längsgerichtete Verstärkungselemente verwendet, damit die Schrumpfrichtung der Umhüllung nicht beeinflußt wird. Dies hat jedoch zur Folge, daß sich Verletzungen, wie zum Beispiel Einrisse in Längsrichtung, ungehindert fortsetzen können. Dies ist besonders dann gefährlich, wenn diese Verletzungen an einem stirnseitigen Rand folgen, da dann beim Schrumpfen infolge der Schrumpfkräfte ein weiteres Einreißen in Längsrichtung der Umhüllung nicht aufzuhalten ist.

Um dieses Problem zu lösen, werden zum Beispiel auch Gewebe oder Gewirke eingesetzt, die in der europäischen Patentschrift 0 117 026 beschrieben werden. Dort werden jedoch schrumpfbare Gewebe verwendet, die in einem nicht schrumpfbaren Material eingebettet sind. Um eine entsprechende höhere mechanische Festigkeit zu erreichen, sind in diesen Geweben neben dem in einer ersten Schrumpfrichtung verlaufenden schrumpfbaren Fäden auch nicht schrumpfbare, wärmebeständige, nicht metallische Fäden eingelegt, die in der zweiten Geweberichtung verlaufen. So ist also hier die wärmeschrumpfbare Komponente mit der nicht wärmeschrumpfbaren Komponente in einer Matrix verwebt. Trotzdem ist dadurch auch bei diesen Einlagen im wesentlichen nur eine Richtung gegen Verletzungen gesichert, da die zweite Richtung von der schrumpfbaren Komponente bestimmt ist. Zum anderen ist die Herstellung von Umhüllungen mit derartigen Geweben mit verschiedenen Komponenten sehr aufwendig und durch die verschiedenartigen Materialien unter Umständen auch beschwerlich. Da die einzelnen Komponenten aus natürlichen oder synthetischen, elektrisch nicht leitenden Materialien bestehen, kann beispielsweise mit einem derartigen Gewebe auch keine elektrische wie auch magnetische Abschirmung erreicht werden.

Aus der japanischen Patentanmeldung JP 77-28 254 ist eine schrumpfbare Umhüllung bekannt, die mit einer durchgehenden Metallfolie beschichtet ist. Da beim Schrumpfen die Beweglichkeit der Umhüllung nicht beeinträchtigt werden darf, kann diese Metallfolie nur sehr geringe Dicke aufweisen, so daß sie gegen mechanische Belastungen, insbesondere gegen Rißbildung keinen zusätzlichen Schutz bieten kann.

Bei dem deutschen Gebrauchsmuster DE-U-75 01 913 werden als Verstärkungselemente längliche Metallelemente eingelagert. Gegen Rißbildung in Längsrichtung ist auch hier kein Schutz gegeben. Außerdem ist hier kein sicherer Schutz gegen äußere elektrische bzw. magnetische Störungen gegeben.

Aus der europäischen Anmeldung EP-A-D 008 912 ist eine schrumpfbare Umhüllung bekannt, bei der die benötigte Wärme mit mäanderartig eingelegten Heizdrähten erfolgt. Auch hier ist in der Schrumpfrichtung kein sicherer Schutz gegen Rißbildung gegeben. Dies ist auch dann der Fall, wenn zusätzlich thermoplastische Fäden quer zur Richtung der Heizfäden eingelagert sind.

Für die vorliegende Erfindung ergibt sich nun die Aufgabe, eine wärmeschrumpfbare Umhüllung zu schaffen, deren mechanische Belastbarkeit gegenüber bestehenden Gebilden erhöht ist, wobei gleichzeitig eine elektrische wie auch magnetische Abschirmung des umhüllten Gegenstandes erreicht werden soll. Die gestellte Aufgabe wird nun mit einer wärmeschrumpfbaren Umhüllung der eingangs erläuterten Art dadurch gelöst, daß die schrumpfbare Komponente als Flachenfolie in der Umhüllung ausgebildet ist und daß die mechanische Verstärkungskomponente zumindest eine metallische Matrix aus Drähten enthält, wobei die Matrix als ein beim Schrumpfvorgang verformbares Gewebe, Gewirke oder Gitter ausgebildet und zumindest teilflächig mit der schrumpfbaren Komponente in Verbindung gebracht ist.

Die wärmeschrumpfbare Umhüllung gemäß der Erfindung besitzt nun gegenüber bisherigen Ausführungsformen besondere Vorteile darin, daß die mechanische Belastbarkeit in vielfältiger Hinsicht verbessert ist. So wird beispielsweise das Ein- und Weiterreißen der Umhüllung bei Mikrorissen, Kerben, unsauberen Abschnitten oder bei Löchern verhindert. Weiterhin ergeben sich bei einer derartigen Umhüllung Verbesserungen bezüglich der Druck- und Schlagfestigkeit. So ist nun auch möglich, daß man in eine Umhüllung gemäß der Erfindung gezielt Einschnitte und Locher für zusätzliche Einführungen von Zusatzelementen, wie beispielsweise von Ventilen, Verschlußelementen oder ähnlichen Gegenständen, einbringen kann. Die Ausbildung der Verstärkungskomponente in der erfindungsgemäßen Art ergibt auch eine elektrische wie magnetische Abschirmung des umhüllten Gegenstandes, so daß ohne weitere zusätzliche Einlagen eine diesbezügliche Abschirmung gegeben ist. Bei entsprechender Ausbildung dieser Verstärkungs-komponente ist es sogar möglich, durch Anlegen an eine Stromquelle Wärme zu erzeugen, durch die eine Schrumpfung der wärmeschrumpfbaren Komponente in Gang gesetzt wird.

Die erfindungsgemäße wärmeschrumpfbare Umhüllung besteht im wesentlichen aus zwei Komponenten. Die eine Komponente bringt bei Erwärmung die Schrumpfkräfte auf, die nötig sind, um die Umhüllung ihrem Formgedächtnis entsprechend zurückzubilden. Wenn nun ein Gegenstand umschlossen ist, der in seiner Gestalt größer ist als die dem Formgedächtnis der Umhüllung entsprechende Endform, so wird dieser dicht umformt. Bei entsprechenden Einlagen, zum Beispiel einem gebräuchlichen Schmelzkleber wird bei diesem Vorgang zusätzlich ein dichter Abschluß geschaffen. Die Umhüllung gemäß der Erfindung besitzt jedoch als zweite Komponente eine metallische Matrix, mit deren Hilfe die vorher angegebenen Probleme gelöst werden. Bei dieser metallischen Matrix kann es sich je nach Anwendungsfall um einzelne metallische Fäden oder auch um flächige Metallgewebe oder Metallgestricke handeln. Diese Verstärkungskomponenten können nun in der schrumpfbaren Komponente selbst eingelagert sein oder sie werden vor dem Ein- bzw. Aufbringen auf die schrumpffähige Komponente in eine zusätzliche synthetische Matrix eingebettet. Die letztgenannte Ausführungsform erleichtert die Herstellung der erfindungsgemäßen Umhüllung, da einerseits die schrumpffähige Komponente und andererseits die Verstärkungskomponente jeweils ihren optimalen Erfordernissen angepaßt werden kann.

Die wärmeschrumpffähige Komponente kann aus einer schrumpffähigen polymeren Flächenfolie bestehen oder auch aus einer Matrix mit eingebetteten schrumpffähigen, polymeren Fasern gebildet werden. Als Materialien kommen alle bisher gebräuchlichen Schrumpfcompounds in Frage, die ganz allgemein jede Art von vernetzten, kristallinen Thermoplasten, wie zum Beispiel vernetzte Polyolefine umfassen. Besonders geeignet ist hierfür Polyethylen, Polybuten und ähnliche auf dieser Basis aufgebaute Kunststoffe. Diese Grundmaterialien werden nach der Extrusion in an sich bekannter Weise durch Bestrahlung oder durch chemische Mittel vernetzt und dann geweitet. Durch das Weiten der extrudierten Flächenfolie wird ihr das Formgedächtnis eingegeben, welches der Schrumpffähigkeit zugrunde liegt. Außerdem können für die schrumpffähigen Komponente auch schrumpffähige, polymere Fasern verwendet werden, wie sie im Prinzip aus der bereits benannten europäischen Patentschrift 0 117 026 bekannt sind. Da jedoch bei der Umhüllung gemäß der Erfindung eine separate Verstärkungskomponente ein- bzw. aufgebracht wird ist ein Mischgewebe wie es in der genannten Schrift angegeben ist nicht erforderlich und vereinfacht deshalb die Herstellungsweise. So ist es zweckmäßig, die schrumpffähige Komponente in diesem Ausführungsbeispiel nur aus schrumpffähigen Fäden zu bilden, wodurch sich eine gleichmäßigere Schrumpfung ergibt.

Zwischen der schrumpfbaren Komponente und der Verstärkungskomponente können je nach Anwendungsfall zusätzliche Schichten, zum Beispiel aus Kleber eingebracht werden. Auch ist es möglich und für besondere Fälle von Vorteil, mehrere verschiedene metallische Materialien zu verwenden. So ist es auch möglich im Sinne der Erfindung die metallische Verstärkungskomponente auch beidseitig auf die schrumpfende Komponente aufzubringen, wodurch die vorgenannten erfinderischen Vorteile zusätzlich verstärkt werden. Besonders bei beschichteten Verstärkungskomponenten ist es vorteilhaft, einen Längsrand über die schrumpfbare Komponente hinaus als Untertritt zu verlängern, so daß eine Überdeckung des Längsspaltes möglich ist.

In einer weiteren Modifikation der Erfindung wird die metallische Verstärkungskomponente nur lokal begrenzt aufgebracht und zwar in den gefährdeten Bereichen, zum Beispiel in den Randbereichen oder an den Stellen, an denen zusätzliche Öffnungen eingebracht werden sollen. Dies empfiehlt sich zum Beispiel bei Umhüllungen, die im allgemeinen mechanisch weniger belastet sind, die aber auf diese Weise in den Gefahrenbereichen vor den bisher auftretenden Defekten geschützt sind. Weitere Vorteile der erfindungsgemäßen metallischen Verstärkungskomponente gegenüber einer bisher bekannten textilen Matrix liegen zum Beispiel auch darin, daß diese wesentlich billiger und problemloser in der Handhabung wie auch in der Herstellung sind.

Wesentliche Vorteile sind auch darin zu sehen, daß keine thermische Schädigung bzw. Zerstörung der metallischen Verstärkungskomponente durch die in der Regel beim Schrumpfen verwendete Flamme auftreten können. Eine Schädigung durch Mikroorganismen, wie zum Beispiel Pilzen, ist ebenfalls nicht möglich. Eine Oxydation der metallischen Verstärkungskomponenten kann zum Beispiel durch Einbettung in der wärmeschrumpfbaren Komponente ausgeschlossen werden. Dies ist deshalb sicher, da sich das rückgeschrumpfte polymere Material in den einzelnen Maschen eines zum Beispiel metallischen Gestrickes befindet und somit die einzelnen Drähte gut umschließt. Außerdem können zur Lösung dieses Problems auch rostfreie, zum Beispiel verzinnte Drähte oder Gewebe verwendet werden.

Die Ausbildung der Verstärkungskomponente als metallische Matrix, insbesondere als Gewebe, bietet wesentlich verbesserte mechanische Eigenschaften als sie bisher möglich waren. Dies gilt besonders hinsichtlich der Druck- und Schlagbeanspruchung, der gezielten Einbringung von Löchern und Einschnitten, und den dabei entstehenden Gefahren bezüglich des Ein- und Weiterreißens. Die metallische Ausbildung bietet auch zusätzlich eine elektrische Abschirmung, zum Beispiel für empfindliche Kabelspleiße, da gewissermaßen ein Faradayischer Käfig gebildet wird. Bisher hierfür notwendige zusätzliche Einlagen können entfallen und
vereinfachen somit die Montage.

Ein weiterer großer Vorteil einer solchen metallischen Verstärkungseinlage als Matrix liegt darin,
daß man bei entsprechender Ausbildung in Form
von Heizdrähten bei Anlegen an eine elektrische
Stromquelle eine Erwärmung der schrumpfbaren
Komponente erreichen kann, durch die das
Schrumpfen der Umhüllung bewirkt wird. Vorteile
sind hierbei in einer höheren Schrumpfgeschwindigkeit zu sehen und in einem zeitgleichen, wesentlich gleichmäßigeren Schrumpfen der Umhüllung. Durch entsprechende Regelung kann auch
die Gefahr von örtlicher Überhitzung ausgeschlossen werden. Zusätzlich besteht die Möglichkeit,
daß je nach Einlageart der metallischen Matrix,
durch entsprechende Materialwahl und auch durch
entsprechende Kombination der Materialien sowie
durch eventuell nur lokale Einlagerungen der Matrix
nur örtlich begrenzte Schrumpfungen durchzuführen. Durch derartige Kombinationen lassen sich
beispielsweise auch verschieden starke Schrumpfungsbereiche herstellen.

Die Erfindung wird nun anhand von sieben
Figuren näher erläutert.

Figur 1    zeigt eine Flächenfolie für eine Umhüllung gemäß der Erfindung, bei
           der die metallische Verstärkungs-
           komponente in der schrumpfbaren
           Komponente eingelagert ist.

Figur 2    zeigt den Verbund zwischen der Ver-
           stärkungskomponente mit eingela-
           gerter metallischer Matrix und der
           schrumpfbaren Komponente.

Figur 3    zeigt ein Ausführungsbeispiel nach

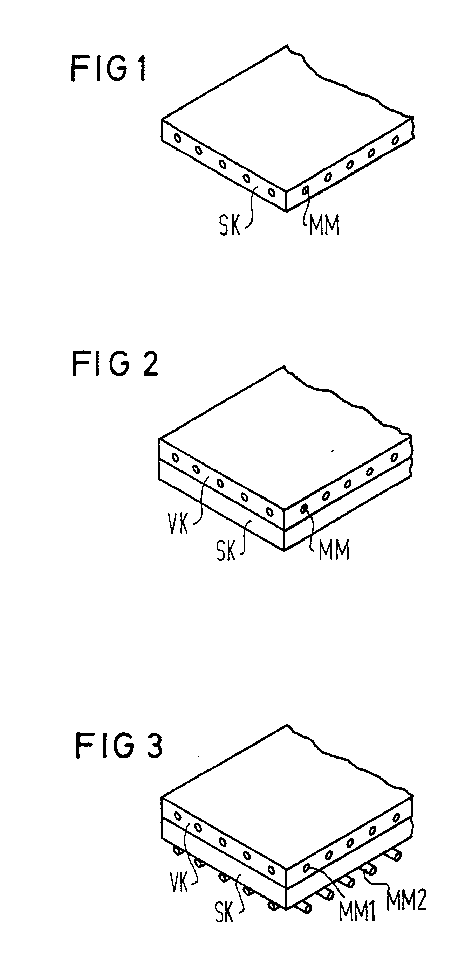

           Figur 2 mit einer zusätzlichen metallischen Matrix.

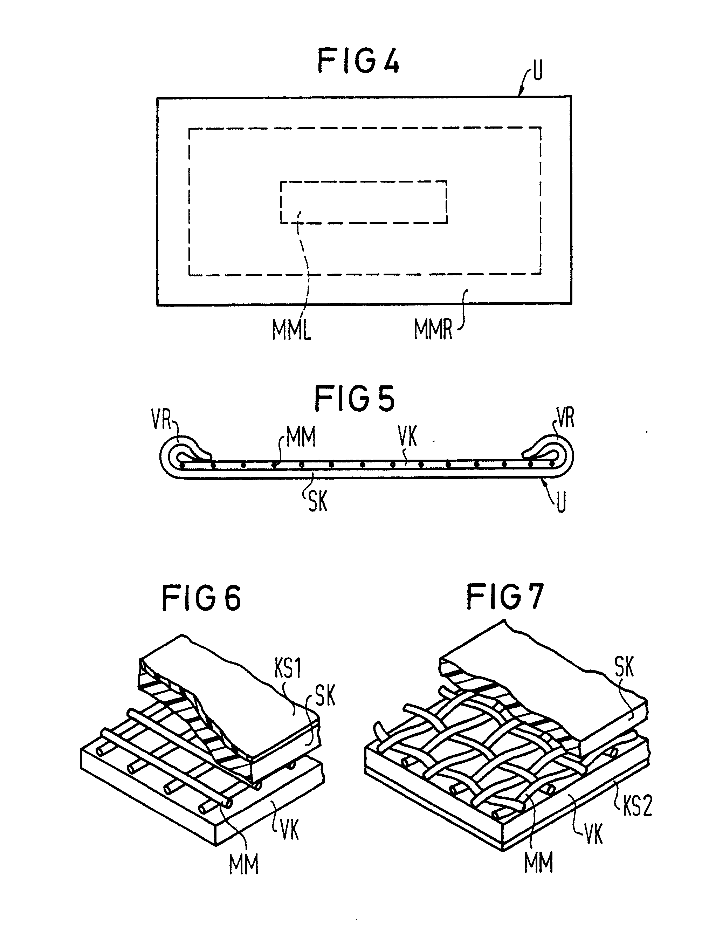

Figur 4    verdeutlicht, daß die Verstärkungs-
           komponente nur in begrenzten Be-
           reichen der Umhüllung angeordnet
           ist.

Figur 5    zeigt eine Umhüllung mit angedeuteten Verschlußelementen entlang der
           Längsränder.

Figur 6    zeigt den Verbundaufbau eines Aus-
           führungsbeispiels mit einer aus ein-
           zelnen Verstärkungselementen in git-
           terförmiger Struktur aufgebauten Ma-
           trix.

Figur 7    zeigt den Verbundaufbau eines Ausführungsbeispiels mit gewirkter bzw.
           gewebter Struktur von metallischen
           Fadenelementen in der Verstärkungskomponente.

Die Figur 1 zeigt ein Ausführungsbeispiel für
eine erfindungsgemäße Umhüllung, bei der in der
schrumpfbaren Komponente SK die metallische
Verstärkungsmatrix MM eingelagert ist. Diese metallische Matrix ist, wie bei allen nachfolgenden
Ausführungsbeispielen, aus einzelnen fadenförmigen Metallelementen gebildet, die entweder in loser, in gitterförmiger oder in gewebter bzw. gewirkter Struktur verwendet werden. Die einzelnen Metallelemente müssen jedoch so flexibel sein, daß
eine Formänderung möglich ist, wie sie beim
Schrumpfvorgang der schrumpfbaren Komponente
erforderlich ist. Die einzelnen Metallelemente für
solche Strukturen können auch durch eine Mehrzahl von einzelnen Fadenelementen gebildet werden, so daß die Einzelelemente im Durchmesser
geringer sein können. Bei einer solchen Ausführung wird jedoch die Flexibilität der metallischen
Matrix wesentlich erhöht. Die einzelnen fadenförmigen Metallelemente können zum Beispiel aus
Stahl, Kupfer oder anderen Metallen bestehen, wobei der Querschnitt dieser Metallelemente in beliebiger geometrischer Form je nach Metall und den
Anfordernissen entsprechend ausgeführt sein kann.

Die Figur 2 zeigt nun ein Ausführungsbeispiel,
bei dem die metallische Matrix MM in einer separaten Verstärkungskomponente VK eingelagert ist.
Dieses Gebilde ist dann als Schicht auf die
schrumpfbare Komponente SK aufgebracht. Die
Verstärkungskomponente VK besteht aus Kunststoff, vorzugsweise aus dem gleichen Material wie
die schrumpfbare Komponente, zum Beispiel aus
Polyethylen, wobei die Verstärkungskomponente
nicht oder nur gering vernetzt ist, im Gegensatz zur
schrumpfbaren Komponente SK. Bei gleichem Material ergeben sich beim Zusammenhaften der einzelnen Schichten erhebliche Vorteile, da praktisch
eine Materialverschmelzung erfolgen kann. Die Verstärkungskomponente VK und die schrumpfbare
Komponente SK können jedoch auch mit Hilfe einer Zwischenschicht aus einem an sich bekannten
Schmelzkleber zusammengefügt werden.

Die Figur 3 zeigt einen weiteren Verbund mit
einer zusätzlichen metallischen Matrix MM2, die
auf der zweiten Seite der schrumpfbaren Komponente SK aufgebracht ist; während die erste Seite
beispielsweise mit einer Verstärkungskomponente
VK versehen ist, in welcher die metallische Matrix
MM1 nach dem Prinzip der Figur 2 eingelagert ist.
Bei diesem Beispiel ergeben sich demnach verbesserte Eigenschaften bezüglich der Festigkeit oder
auch der elektrischen bzw. magnetischen Schirmfähigkeit. So wie hier angedeutet ist, können jedoch auch weitere Verbundfolien im Sinne der Erfindung hergestellt werden, wobei die gegenseitige
Haftung entweder direkt oder mittels Haftvermittler
erfolgen kann.

Die Figur 4 erläutert, daß die Verstärkungskomponente VK zum Beispiel auch nur bereichsweise auf der schrumpfbaren Komponente SK angeordnet werden kann, wie zum Beispiel in den Randbereichen MMR oder für spezielle Bereiche, wie zum Beispiel im Einführungsbereich MML für zusätzliche Elemente wie Ventile oder dergleichen. Für die Einführung dieser Elemente müssen Löcher geschaffen werden, die auch beim Schrumpfvorgang ihre Form und Größe behalten müssen ohne einzureißen. Dies war mit bisherigen Mitteln kaum oder nur sehr schlecht möglich. In diesen Bereichen können nun auch Verschlußelemente oder Klammerelemente zur Bildung von Abzweigen in den stirnseitigen Ausgängen eingesetzt werden.

Die Figur 5 zeigt als Anwendungsbeispiel eine Umhüllung U, die beispielsweise entlang ihrer Längsränder Verschlußelemente VR aufweist, mit deren Hilfe die Umhüllung U zusammengehalten werden kann, wenn sie um einen Gegenstand herumgelegt wurde. Hier ist angedeutet, daß die Längsränder längsverlaufende Umbördelungen aufweisen, in welche Verschlußelemente beliebiger Art eingebracht werden können. Die Umhüllung U besteht je nach Erfordernis aus den Verbundstrukturen wie sie oben bereits beschrieben worden sind, das heißt, sie bestehen aus einer schrumpfbaren Komponente SK, einer Verstärkungskomponente VK mit einer metallischen Matrix MM und je nach Verwendungszweck kann eine zusätzliche Schicht aus Schmelzkleber aufgebracht werden.

Die Figur 6 zeigt in einer Aufbruchdarstellung den Verbundaufbau einer Umhüllung gemäß der Erfindung, bestehend aus der Verstärkungskomponente VK, der metallischen Matrix MM, der schrumpfbaren Komponente SK und einer zusätzlichen Schicht aus zum Beispiel einem Kleber KS1. Hier ist in der Darstellung ein Beispiel gewählt, bei dem die metallische Matrix MM auf der Verstärkungskomponente VK aufgebracht ist; doch ist ebenso die Einlagerung derselben in der Verstärkungskomponente VK denkbar. Bei dem gezeichneten Ausführungsbeispiel kann der Verbund zum Beispiel zwischen der Verstärkungskomponente VK und der schrumpfbaren Komponente SK in den Zwischenbereichen der metallischen Matrix MM erfolgen, zum Beispiel durch Materialverschmelzung. Die Kleberschicht KS1 kann ebenso gut auf der Seite der Verstärkungskomponente VK aufgebracht sein. Dies hängt davon ab, welche Seite schließlich dem zu umhüllenden Gegenstand zur Abdichtung zugewandt wird. Als Beispiel für die metallische Matrix MM ist hier ein rechteckiger, gitterförmiger Aufbau gezeigt. Doch sind selbstverständlich auch andere Strukturen denkbar, die flexibel genug sind und die bei der Schrumpfung eine Formänderung der schrumpfbaren Komponente SK zulassen und sich damit auch selbst anpassen. So eignen sich besonders dünne fadenförmige Elemente, die in litzenartigem Aufbau zu einem Verbundelement für die metallische Matrix zusammengefaßt werden. Durch diesen litzenartigen Aufbau wird die Flexibilität besonders erhöht.

Die Figur 7 zeigt abschließend eine gewirkte oder gewebte Ausführungsform einer metallischen Matrix MM, bei der die einzelnen fadenförmigen Metallelemente miteinander verwoben sind. Diese Gewebe bzw. Gewirke können auf oder auch innerhalb der Verstärkungskomponente VK angeordnet sein. Auch eine solche Ausführungsform erfüllt die vorher mehrfach erläuterten Anforderungen. Diese Gewebeanordnung für eine metallische Matrix kann, wie auch bei allen vorhergehenden Beispielen, in das Material der Verstärkungskomponente VK eingelagert sein, wobei die Einlagerung auch als Einbettung zwischen zwei gleichartigen Verstärkungskomponenten VK vorgenommen werden kann. In diesen Fällen erfolgt der Verbund entweder durch zusätzliche Haftvermittler oder durch Materialverschmelzung in den Zwischenräumen der metallischen Matrix. Auf diese Weise wird die metallische Matrix allseitig von dem Kunststoffmaterial der Verstärkungskomponente VK umschlossen, so daß eine Korrosion der metallischen Matrix nicht erfolgen kann. Im allgemeinen kann die Zusammenfügung und der Aufbau der gesamten Anordnung je nach Bedürfnis abgewandelt und zusammengestellt werden. Hier ist beispielsweise auf der Verstärkungskomponente VK eine Kleberschicht KS2 aufgebracht. Die übrigen Verhältnisse gleichen den bereits beschriebenen Ausführungsformen.

In allen vorgenannten Ausführungsbeispielen ist davon ausgegangen worden, daß die schrumpfbare Komponente SK aus einer flächenhaften Folie gebildet ist, die nach der Extrusion durch Vernetzung und anschließendes Weiten ihr Formgedächtnis erhalten hat. Die Erfindung erstreckt sich jedoch auch auf schrumpfbare Komponenten SK, die als schrumpfbare Gewebe bzw. Gewirke ausgebildet sind, wobei die Einzelelemente aus schrumpffähigen, polymeren Fäden bestehen. Diese polymeren Fäden können in gleicher oder ähnlicher Weise wie die metallische Matrix als Verbund in einer weiteren polymeren Kunststoffolie eingelagert werden. Auf diese Weise erhält man wiederum ein flächenhaftes Gebilde, das in der oben beschriebenen Art mit den übrigen Schichtelementen verbunden wird. Eine gesonderte Darstellung ist deshalb auch nicht nötig, da die Wirkungsweise identisch ist mit der einer flächenhaften Schrumpffolie.

Durch entsprechende Wahl der Verstärkungskomponente mit ganz-oder teilfächiger Metallmatrix kann beispielsweise eine Umhüllung mit unterschiedlichen Schrumpfungsbereichen hergestellt werden. So können durch entsprechend starke oder mehrlagige metallische Matrixeinlagen mehr oder weniger stark oder nicht schrumpfende Bereiche ausgebildet werden. Dadurch werden zum Beispiel entsprechende Stützelemente überflüssig und die Montage wird erleichtert.

**Patentansprüche**

1. Wärmeschrumpfbare Umhüllung aus mindestens einer wärmeschrumpfbaren Komponente und aus einer mechanischen Komponente, **dadurch gekennzeichnet,** daß die schrumpfbare Komponente (SK) als Flächenfolie in der Umhüllung ausgebildet ist und daß die mechanische Verstärkungskomponente (VK) zumindest eine metallische Matrix (MM) aus Drähten enthält, wobei die Matrix (MM) als ein beim Schrumpfvorgang verformbares Gewebe, Gewirke oder Gitter ausgebildet und zumindest teilflächig mit der schrumpfbaren Komponente (SK) in Verbindung gebracht ist.

2. Wärmeschrumpfbare Umhüllung nach Anspruch 1, **dadurch gekennzeichnet,** daß die metallische Matrix (MM) auf die schrumpfbare Komponente (SK) direkt, vorzugsweise mittels eines Haftvermittlers, aufgebracht ist.

3. Wärmeschrumpfbare Umhüllung nach einem der vorhergehenden Ansprüche, **dadurch gekennzeichnet,** daß die metallische Matrix (MM) auf eine Verstärkungskomponente (VK) aufgebracht ist.

4. Wärmeschrumpfbare Umhüllung nach einem der Ansprüche 1 oder 2, **dadurch gekennzeichnet,** daß die metallische Matrix (MM) in der Verstärkungskomponente (VK) eingelagert ist.

5. Wärmeschrumpfbare Umhüllung nach einem der vorhergehenden Ansprüche, **dadurch gekennzeichnet,** daß die metallische Matrix (MM) mit der Verstärkungskomponente (VK) und mit der schrumpfbaren Komponente (SK) zu einem mehrfachen Verbund kombiniert ist.

6. Wärmeschrumpfbare Umhüllung nach einem der vorhergehenden Ansprüche, **dadurch gekennzeichnet,** daß die Verstärkungskomponente (VK) aus synthetischem Material, zum Beispiel Polyethylen, besteht, welches nicht bzw. gegenüber der schrumpfbaren Komponente (SK) wenig vernetzt ist.

7. Wärmeschrumpfbare Umhüllung nach einem der vorhergehenden Ansprüche, **dadurch gekennzeichnet,** daß die metallische Matrix (MM) aus verschiedenen Metallelementen besteht.

8. Wärmeschrumpfbare Umhüllung nach einem der vorhergehenden Ansprüche, **dadurch gekennzeichnet,** daß die Einzelelemente der metallischen Matrix (MM) verschiedene Querschnittsformen aufweisen.

9. Wärmeschrumpfbare Umhüllung nach einem der vorhergehenden Ansprüche, **dadurch gekennzeichnet,** daß zwischen den der Verstärkungskomponente (VK) bzw. der schrumpfbaren Komponente (SK) entsprechenden einzelnen Schichten, Zwischenschichten, zum Beispiel aus Schmelzkleber, angeordnet sind.

10. Wärmeschrumpfbare Umhüllung nach einem der vorhergehenden Ansprüche, **dadurch gekennzeichnet,** daß die Verstärkungskomponente (VK) mit der metallischen Matrix (MM) nur bereichsweise (MMR, MML), vorzugsweise an Rändern und Löchern der Umhüllung angeordnet sind.

11. Wärmeschrumpfbare Umhüllung nach einem der vorhergehenden Ansprüche, **dadurch gekennzeichnet,** daß die aus den Verbundfolien aufgebaute Umhüllung (U) entlang der Längsränder Verschlußelemente (VR) aufweist.

12. Wärmeschrumpfbare Umhüllung nach einem der vorhergehenden Ansprüche, **dadurch gekennzeichnet,** daß die schrumpfbare Komponente (SK) aus einem vernetzten und geweiteten Polyolefin, vorzugsweise Polyethylen oder Polybuten, besteht.

13. Wärmeschrumpfbare Umhüllung nach einem der vorhergehenden Ansprüche, **dadurch gekennzeichnet,** daß die metallische Matrix (MM) als Heizfäden ausgebildet ist, die an eine Stromquelle angeschlossen werden können.

14. Wärmeschrumpfbare Umhüllung nach einem der vorhergehenden Ansprüche, **dadurch gekennzeichnet,** daß die schrumpfbare Komponente (SK) aus einer flächenhaften Folie besteht.

15. Wärmeschrumpfbare Umhüllung nach einem der Ansprüche 1 bis 13,
**dadurch gekennzeichnet,**
daß die schrumpfbare Komponente (SK) aus einer Matrix von schrumpfbaren, polymeren Fasern gebildet ist.

16. Wärmeschrumpfbare Umhüllung nach Anspruch 15,
**dadurch gekennzeichnet,**
daß die schrumpfbaren Fasern in einem polymeren Material eingebettet sind.

17. Wärmeschrumpfbare Umhüllung nach einem der vorhergehenden Ansprüche,
**dadurch gekennzeichnet,**
daß durch eine verschieden stark ausgebildete metallische Matrix (MM) verschieden starke Schrumpfungsbereiche geschaffen sind.

18. Wärmeschrumpfbare Umhüllung nach einem der Ansprüche 1 bis 16,
**dadurch gekennzeichnet,**
daß durch Mehrfachschichten aus metallischen Matrizen (MM) verschieden starke Schrumpfungsbereiche geschaffen sind.

## Claims

1. Heat-shrinkable covering composed of at least one heat-shrinkable component and of a mechanical component, characterised in that the shrinkable component (SK) is formed as a sheet-like film in the covering and in that the mechanical reinforcing component (VK) includes at least a metallic matrix (MM) of wires, the matrix (MM) taking the form of a weave, knit or grid which is able to deform during the shrinking process, and is brought into union with the shrinkable component (SK) at least over sub-regions.

2. Heat-shrinkable covering according to Claim 1, characterised in that the metallic matrix (MM) is applied directly to the shrinkable component (SK), preferably by means of an adhesion promoter.

3. Heat-shrinkable covering according to one of the preceding claims, characterised in that the metallic matrix (MM) is applied to a reinforcing component (VK).

4. Heat-shrinkable covering according to one of Claims 1 or 2, characterised in that the metallic matrix (MM) is embedded in the reinforcing component (VK).

5. Heat-shrinkable covering according to one of the preceding claims, characterised in that the metallic matrix (MM) is combined with the reinforcing component (VK) and with the shrinkable component (SK) to form a multiple composite.

6. Heat-shrinkable covering according to one of the preceding claims, characterised in that the reinforcing component (VK) consists of synthetic material, for example polyethylene, which is not cross-linked or is cross-linked little in comparison with the shrinkable component (SK).

7. Heat-shrinkable covering according to one of the preceding claims, characterised in that the metallic matrix (MM) is composed of different metal elements.

8. Heat-shrinkable covering according to one of the preceding claims, characterised in that the individual elements of the metallic matrix (MM) have different cross-sectional shapes.

9. Heat-shrinkable covering according to one of the preceding claims, characterised in that intermediate layers, for example of hot-melt adhesive, are arranged between the individual layers corresponding to the reinforcing component (VK) and the shrinkable component (SK).

10. Heat-shrinkable covering according to one of the preceding claims, characterised in that the reinforcing component (VK) is arranged with the metallic matrix (MM) only in certain regions (MMR, MML), preferably at edges and holes of the covering.

11. Heat-shrinkable covering according to one of the preceding claims, characterised in that the covering (U) made up of the composite films has closure elements (VR) along the longitudinal edges.

12. Heat-shrinkable covering according to one of the preceding claims, characterised in that the shrinkable component (SK) consists of a cross-linked and stretched polyolefin, preferably polyethylene or polybutene.

13. Heat-shrinkable covering according to one of the preceding claims, characterised in that the metallic matrix (MM) is in the form of heating filaments which can be connected to a current source.

14. Heat-shrinkable covering according to one of the preceding claims, characterised in that the shrinkable component (SK) is composed of a sheet-like film.

15. Heat-shrinkable covering according to one of Claims 1 to 13, characterised in that the shrinkable component (SK) is formed from a matrix of shrinkable, polymeric fibres.

16. Heat-shrinkable covering according to Claim 15, characterised in that the shrinkable fibres are embedded in a polymeric material.

17. Heat-shrinkable covering according to one of the preceding claims, characterised in that regions of shrinkage to different degrees are created by a metallic matrix (MM) formed with different strengths.

18. Heat-shrinkable covering according to one of Claims 1 to 16, characterised in that regions of shrinkage to different degrees are created by multiple layers of metallic matrices (MM).

**Revendications**

1. Gaine thermorétrécissable formée par au moins un composant thermorétractable et par un composant mécanique, caractérisée par le fait que le composant thermorétrécissable (SK) est réalisé sous la forme d'une feuille d'une certaine surface disposée dans la gaine et que le composant mécanique de renforcement (VK) contient au moins une matrice métallique (MM) de fils, qui est réalisée sous la forme d'un tissu, d'un tricot ou d'une grille déformable lors de l'opération de contraction et établit une liaison, au moins sur une surface partielle, avec le composant rétrécissable (K).

2. Gaine thermorétrécissable suivant la revendication 1, caractérisée par le fait que la matrice métallique (MM) est déposée directement sur le composant rétrécissable (SK), de préférence moyennant l'interposition d'un adhésif.

3. Gaine thermorétrécissable suivant l'une des revendications précédentes, caractérisée par le fait que la matrice métallique (MM) est déposée sur un composant de renforcement (VK).

4. Gaine thermorétrécissable suivant l'une des revendications 1 ou 2, caractérisée par le fait que la matrice métallique (MM) est insérée dans le composant de renforcement (VK).

5. Gaine thermorétrécissable suivant l'une des revendications précédentes, caractérisée par le fait que la matrice métallique (MM) est combinée au composant de renforcement (VK) et au composant rétrécissable (SK) pour former une structure composite multiple.

6. Gaine thermorétrécissable suivant l'une des revendications précédentes, caractérisée par le fait que le composant de renforcement (VK) est réalisé en un matériau synthétique, par exemple du polyéthylène, qui n'est pas réticulé ou est moins réticulé que le composant rétrécissable (SK).

7. Gaine thermorétrécissable suivant l'une des revendications précédentes, caractérisée par le fait que la matrice métallique (MM) est constituée de différents éléments métalliques.

8. Gaine thermorétrécissable suivant l'une des revendications précédentes, caractérisée par le fait que les éléments individuels de la matrice métallique (MM) possèdent, en coupe transversale, des formes différentes.

9. Gaine thermorétrécissable suivant l'une des revendications précédentes, caractérisée par le fait que les couches intercalaires, par exemple formées d'une colle fusible, sont disposées entre les différentes couches qui correspondent au composant de renforcement (VK) ou au composant rétrécissable (SK).

10. Gaine thermorétrécissable suivant l'une des revendications précédentes, caractérisée par le fait que le composant de renforcement (VK) et la matrice métallique (MM) sont disposés uniquement par endroits (MMR, MML), de préférence sur des bords et des trous de la gaine.

11. Enveloppe thermorétrécissable suivant l'une des revendications précédentes, caractérisée par le fait que la gaine (U) constituée par des feuilles composites possède, le long des bords longitudinaux, des éléments de fermeture (VR).

12. Gaine thermorétrécissable suivant l'une des revendications précédentes, caractérisée par le fait que le composant rétrécissable (SK) est constitué par une polyoléfine réticulée et étirée, de préférence du polyéthylène ou du polybutène.

13. Gaine thermorétrécissable suivant l'une des revendications précédentes, caractérisée par le fait que la matrice métallique (MM) est réalisée sous la forme de fils chauffants qui peuvent être raccordés à une source de courant.

14. Gaine thermorétrécissable suivant l'une des revenndications précédentes, caractérisée par le fait que le composant rétrécissable (SK) est formé par une feuille possédant une certaine étendue en surface.

15. Gaine thermorétrécissable suivant l'une des revendications 1 à 13, caractérisée par le fait que le composant rétrécissable (SK) est formé par une matrice de fibres polymériques rétrécissables.

16. Gaine thermorétrécissable suivant la revendication 15, caractérisée par le fait que les fibres rétrécissables sont noyées dans un matériau polymérique.

17. Gaine thermorétrécissable suivant l'une des revendications précédentes, caractérisée par le fait que des zones de rétrécissement ayant des épaisseurs différentes sont créées par une matrice métallique (MM) formée avec des épaisseurs différentes.

18. Enveloppe thermorétrécissable selon l'une des revendications 1 à 16, caractérisée par le fait que des zones de rétrécissement possédant des épaisseurs différentes sont créées au moyen de couches multiples formées par des matrices métalliques (MM).

# FIG 1

SK  MM

# FIG 2

VK  SK  MM

# FIG 3

VK  SK  MM1  MM2

# FIG 4

MML  MMR  U

# FIG 5

VR  MM  VK  VR

SK  U

# FIG 6

KS1  SK

VK

MM

# FIG 7

SK

KS2

VK

MM